Europäisches Patentamt

(19) European Patent Office

Office européen des brevets

(11) Publication number: **0 058 446**
**A1**

(12) # EUROPEAN PATENT APPLICATION

(21) Application number: **82200105.3**

(22) Date of filing: **29.01.82**

(51) Int. Cl.³: **H 04 N 5/22**
**H 04 N 7/00, H 04 Q 3/52**

(30) Priority: **18.02.81 GB 8105026**

(43) Date of publication of application:
**25.08.82 Bulletin 82/34**

(84) Designated Contracting States:
**DE FR GB IT SE**

(71) Applicant: **PHILIPS ELECTRONIC AND ASSOCIATED INDUSTRIES LIMITED**
**Arundel Great Court 8 Arundel Street**
**London WC2R 3DT(GB)**

(84) Designated Contracting States:
**GB**

(71) Applicant: **N.V. Philips' Gloeilampenfabrieken**
**Pieter Zeemanstraat 6**
**NL-5621 CT Eindhoven(NL)**

(84) Designated Contracting States:
**DE FR IT SE**

(72) Inventor: **Andrew, Derek**
**Philips Research Laboratories**
**Redhill Surrey RH1 5HA(GB)**

(74) Representative: **Boxall, Robin John et al,**
**Philips Electronic and Associated Ind. Ltd. Patent Department Mullard House Torrington Place London WC1E 7HD(GB)**

(54) **Wideband signal distribution.**

(57) An arrangement for distributing wideband signals comprises a switching matrix (60) which is constructed from logic gates. Signals are applied at inputs (1 to 8) and fed to frequency modulators (21 to 28). The frequency modulators produce a hard limited output signal so that all the information content of the signals is contained in the transition times of the frequency modulated signal. The relative times of the positive (or negative) transitions are faithfully preserved when passing through the gates forming the switch matrix (60). The outputs of the switch matrix are demodulated by means of a pulse counting demodulator formed by a constant pulse width generator (31 to 38) and a low pass filter (41 to 48) and fed to a wideband amplifier (51 to 58) to enable an output signal having a predetermined level to be presented at the output terminal (11 to 18).

The use of a pulse counting demodulator is particularly useful when a fibre optic link (63) is used. The output of the pulse generator is fed to a driver (62) through the optical fibre (63) to a detector (64). The receiver equipment is limited to the optical detector (64), low pass filter (41) and amplifier (51). In addition the bandwidth of the optical fibre may be reduced as only the baseband component of the signal is required.

The arrangement may be used for the distribution of video signals.

EP 0 058 446 A1

./...

Croydon Printing Company Ltd.

1/5

FIG.1

"WIDEBAND SIGNAL DISTRIBUTION"

The invention relates to a circuit arrangement for distributing one or more wideband signals to one or more selected outputs comprising a switching matrix having a plurality of inputs and a plurality of outputs, control means for causing selected inputs of the switching matrix to be coupled to selected outputs of the switching matrix, means for coupling inputs of the circuit arrangement to corresponding inputs of the switching matrix, and means for coupling outputs of the switching matrix to corresponding outputs of the circuit arrangement.

The use of a switch matrix for routing analogue signals is known, for example in telephone exchanges. The switch matrix may comprise relay contacts or solid state switches arranged in a cross point array. When routing wideband signals such as video signals it is desirable that each switch introduces the minimum amount of distortion and noise into the signal and hence the solid state switches have to be of comparatively expensive construction.

It is an object of the invention to provide a circuit arrangement for distributing one or more wideband signals to selected outputs in which an inexpensive switch can be used in the switching matrix.

The invention provides a circuit arrangement for distributing one or more wideband signals as described in the opening paragraph characterised in that the means for coupling each input of the circuit arrangement to the corresponding input of the switching matrix comprises frequency modulation means arranged to produce a signal which is frequency modulated by the wideband signal applied to the respective input of the circuit arrangement, said frequency modulated signal being amplitude limited such that the information content of the signal is contained solely in the transition times of the signal, that the switches within the switching matrix are effective to maintain the relative transition times of the frequency modulated signal, and that the means for coupling outputs of the switching matrix to outputs of the circuit arrangement comprises means for demodulating the
frequency modulated signal.

Since the information content of the limited frequency modulated
signal is contained in the positions of the transitions the switching
matrix can be constructed from logic gates, the relative times of the
transitions being faithfully preserved.

In this specification the term limited frequency modulated signal
is used to mean a frequency modulated signal whose amplitude is limited
so that the information content of the signal is contained solely in
the transition times of the signal.

The frequency modulation means may comprise a voltage controlled
oscillator which may be constructed to give a limited output, the
wideband signal being fed to the control input thereof. A construction
having a limited output could be an astable multivibrator. Such
circuits are readily available in integrated form. If a voltage
controlled oscillator giving a sine wave or non limited output is used
it is necessary to apply its output to a limiting amplifier before
feeding it to the input of the switching matrix.

Cross talk between channels in the switching matrix may cause
pulling of the output of the voltage controlled oscillator and to
reduce this effect a buffer circuit may be connected between the output
of the voltage controlled oscillator and the input of the switch matrix.

The means for demodulating the frequency modulated signal may
comprise a pulse generator arranged to produce a pulse of predetermined
pulse width in response to transitions of the signal at the output of
the switching matrix, the predetermined pulse width being shorter than
the period of one cycle of the highest frequency of the frequency
modulated signal, and means for filtering the pulse train produced by
the pulse generator to recover the input wideband signal.

The pulse generator may comprise an oscillator, a counter, means
for presetting the counter in response to a transition of the limited
signal, means for feeding the output of the oscillator to a clock input
of the counter, means for feeding an output of the counter to the
output of the pulse generator and means for causing the oscillator to
start from a predetermined point of its cycle in response to the
transition of the limited signal.

The arrangement may include a transmission line between the pulse generator and the filtering means and the transmission line may comprise an optical fibre link. Since the signal is sent in the form of a pulse train having constant width pulses at a variable spacing it is possible to use an LED as the transmitting device as non-linearity of the light output characteristic is unimportant.

An embodiment of the invention will now be described, by way of example, with reference to the accompanying drawings, in which:

Figure 1 shows in block schematic form a circuit arrangement for switching video signals according to the invention,

Figure 2 is a circuit diagram of a frequency modulator suitable for use in the arrangement shown in Figure 1,

Figure 3 is a circuit diagram of a switching matrix suitable for use in the arrangement shown in Figure 1,

Figure 4 is a circuit diagram of a constant pulse width generator, a filter and a video amplifier suitable for use in the arrangement shown in Figure 1,

Figures 5 and 6 shows the waveforms of the signals at various points within the circuit arrangement,

Figure 7 shows a switching matrix having two inputs and two outputs, and

Figure 8 shows a switching matrix having sixteen inputs and outputs constructed from the switching matrices shown in Figures 3 and 7.

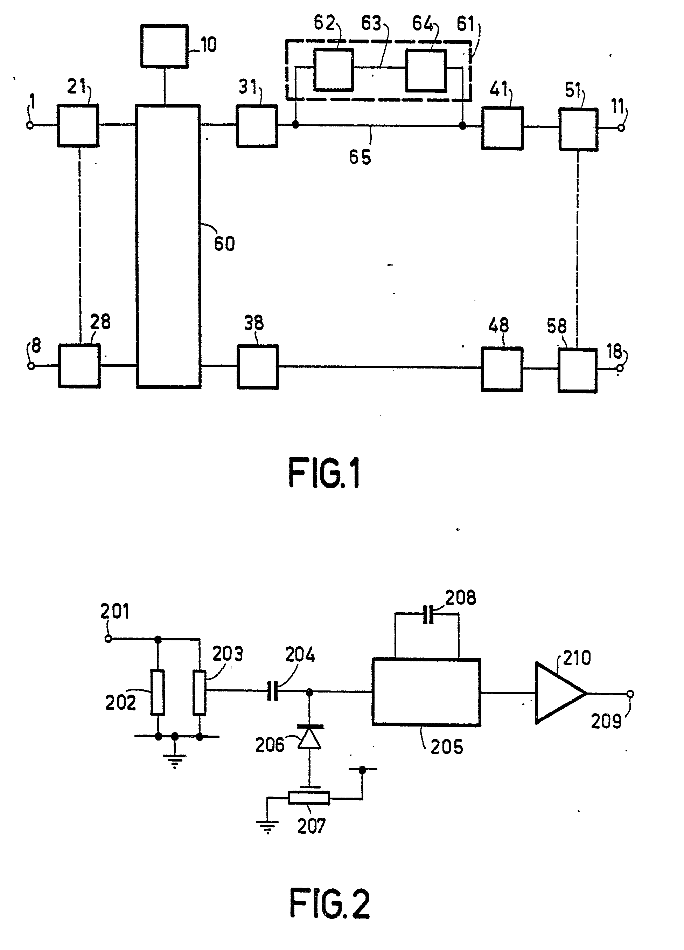

Figure 1 shows a circuit arrangement for switching video signals, the circuit arrangement having eight input terminals 1 to 8 and eight output terminals 11 to 18. Each input terminal is connected to the input of a respective frequency modulator 21 to 28 whose outputs are connected to respective inputs of a switching matrix 60. The switching matrix 60 has eight outputs each of which is connected to the input of a respective one of eight constant pulse width generators 31 to 38. The outputs of the constant pulse width generators 31 to 38 are connected to the inputs of video amplifiers 51 to 58 respectively via low pass filters 41 to 48 the connection between constant pulse width generator 31 and low pass filter 41 being via a link 65. The outputs of the video amplifiers 51 to 58 are connected to the output terminals 11 to 18 of the circuit arrangement. A control circuit 10 is also connected to the switching matrix 60 to control the routing of the video signals through the switch matrix. The control circuit 10 may consist solely
of selection switches associated with each output or may form part of
a larger routing control logic system.

In operation video signals are applied to one or more of the inputs
1 to 8 and are fed to the frequency modulators 21 to 28. The frequency
modulators are constructed to produce a hard limited output the
information content of which is contained in the transition times.
The outputs of the frequency modulators are applied to respective
inputs of the switching matrix 60 which contains logic gates responsive
to the level changes of the limited frequency modulated signals.
Alternatively if a frequency modulator producing a sine wave output
is used its output must be applied to the switching matrix 60 via a
limiting amplifier. The signals are fed under the control of the control
circuit 10 to selected outputs of the matrix 60 and thence to the
input of the respective constant pulse width generator 31 to 38. The
constant pulse width generators each produce a pulse having a pulse
width which is arranged to be just less than the period of one cycle
of the highest frequency of the frequency modulated signal. The pulse
is arranged to commence at either each positive going or each negative
going transition of the signal. The streams of pulses thus produced at
the outputs of the constant pulse width generators 31 to 38 are then
fed through respective low pass filters 41 to 48 to video amplifiers
51 to 58 and from the outputs of the video amplifiers to the output
terminals 11 to 18. The low pass filters 41 to 48 would typically
have a passband of 6.5 MHz and produce the analogue video signal at
their outputs which is processed in the video amplifiers to produce
a standard 1 volt peak to peak video signal.

The outputs of each of the pulse generators 31 to 38 comprises
a train of pulses of constant pulse width but variable pulse spacing,
the spacing depending on the transition instants of the limited
frequency modulated signals. The pulse generator together with its
associated filter form a pulse counting FM detector. It is possible
to separate the pulse generator 31 and filter 41 by removing the link
65 and inserting a transmission link 61 between them. The transmission
link 61 comprises an optical transmitter 62, which may comprise a
circuit driving a light emitting diode (LED) which is coupled to one end of an optical fibre 63. At the other end of the optical fibre 63 the light pulses are detected and converted into electrical signals by an optical receiver 64, the electrical signals then being fed to the filter 41. This enables terminal equipment to be reduced to the optical receiver filter and video amplifier. This modification is not, of course, limited to the first output chain 31, 41, 51 but could be added to any or all of the other output claims.

Figure 2 is a circuit diagram of a frequency modulator suitable for use with the circuit arrangement of Figure 1. An input terminal 201 is connected to the junction one end of a resistor 202 and one end of a potentiometer 203. The other ends of the resistor 202 and potentiometer 203 are connected to earth while the wiper of the potentiometer is connected via a capacitor 204 to the control input of a voltage controlled oscillator (VCO) 205. The control input of the VCO 205 is further connected via a diode 206 to the wiper of a potentiometer 207 which is connected between earth and a point of constant potential. A tuning capacitor 208 is connected across two terminals of the VCO 205 while the output of the VCO 205 is connected to an output terminal 209 via a buffer amplifier 210 which may be a type 10115 line receiver.

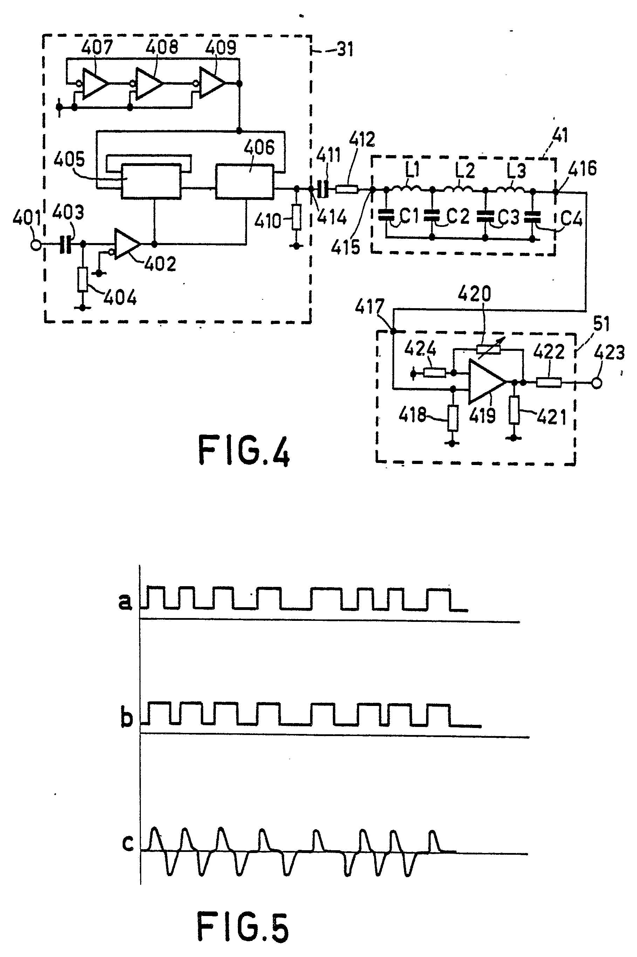

The composite video input signal is fed from input terminal 201 via the capacitor 204 to the control input of the VCO 205 which in this embodiment is a type MC 1658 integrated circuit. The setting of the potentiometer 207 determines the position of the synchronising pulse level on the voltage/frequency characteristic of the VCO 205 while the setting of the potentiometer 203 determines the voltage excursion at the control input of the VCO 205 when driven by the video signal. These potentiometers together with the tuning capacitor 208 determine the frequency of the carrier and sidebands of the frequency modulated video signal at the output of the VCO 205. The carrier frequency and modulation range should be selected so that the sidebands of the FM signal have a low amplitude in the region occupied by the baseband video signal, i.e. from 0 to 6.5 MHz. However in order to assist recovery of the video signal after transmission the carrier frequency should be as low as possible and the modulation range as wide as possible. It is, therefore, necessary to choose the best compromise between these conflicting demands for the particular embodiment used. In the embodiment shown in Figures 1 to 4 the waveform produced at the output of the VCO 205 was centred around 22 MHz and had a frequency deviation of ± 8 MHz. Figure 5a illustrates the form of the output from the VCO 205.

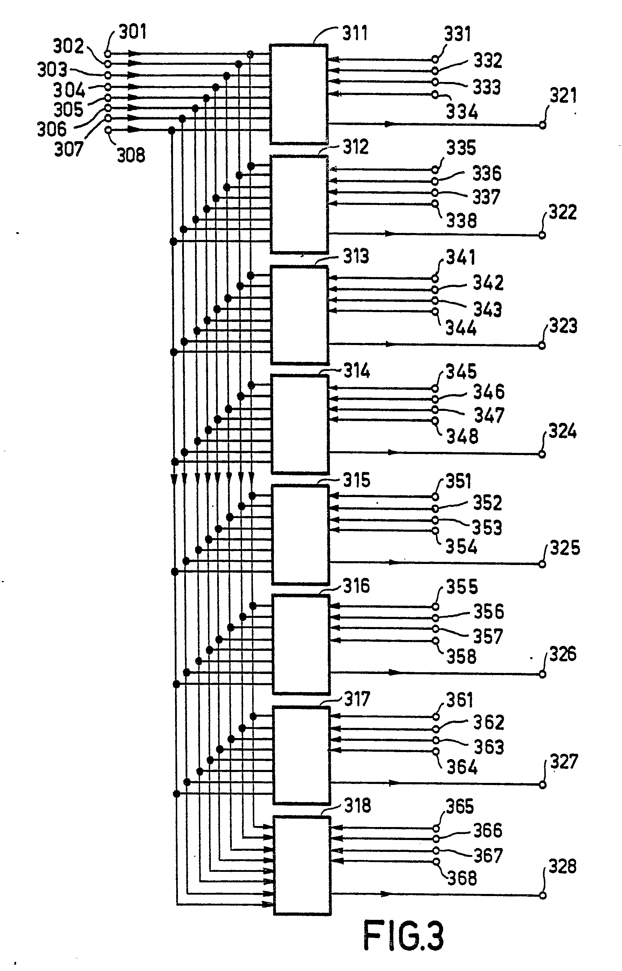

Figure 3 is a circuit diagram of a switching matrix suitable for use as the switching matrix 60 of the circuit arrangement shown in Figure 1. The switching matrix has eight input terminals 301 to 308 for connection to respective outputs of the frequency modulators 21 to 28. The input terminals 301 to 308 are connected to the data inputs of eight one out of eight data selectors 311 to 318 the terminals 301 to 308 being connected to the D0 to D7 inputs of each data selector. In the embodiment shown in the Figures the data selectors 311 to 318 are each formed by a type 10164 ECL integrated circuit. The outputs of the data selectros 311 to 318 are connected to eight output terminals 321 to 328 of the switching matrix. The data selector 311 has four further inputs 331 to 334 three of which are used to select which input signal is switched through to the output and the other of which is an enable input which may be used to allow or prevent any signal from appearing at the output. Similarly and for the same purpose the data selector 312 has four further inputs 335 to 338, the data selector 313 has four further inputs 341 to 344, the data selector 314 has four further inputs 345 to 348, the data selector 315 has four further inputs 351 to 354, the data selector 316 has four further inputs 355 to 358, the data selector 317 has four further inputs 361 to 364, and the data selector 318 has four further inputs 365 to 368.

With the switching matrix arranged as shown in Figure 3 any of the signals at any of the eight input terminals 301 to 308 can be switched to any of the eight outputs. In particular it is possible to switch a single input to more than one output including the case where one input is switched to all eight outputs. Since the input signals at terminal 301 to 308 are hard limited all the information is carried in the timing of the transitions of the signals. Consequently a simple logic gate may be used for switching the signals since the transitions between high and low logic levels will be reproduced at its output. In particular the relative position in time of successive positive or negative going transitions of the input signal will be faithfully reproduced at the output and this is precisely the property of the frequency modulated signal which it is necessary to preserve during its passage through the switching matrix. The relative times of successive transitions will not necessarily be maintained as these will be dependent on the rise and fall times and the threshold voltage of the gates.

With the switching matrix 60 and frequency modulators 21 to 28 constructed as shown in Figures 2 and 3 the provision of the buffer amplifier 210 reduces the possibility of crosstalk between adjacent signals in the switching network being fed back to the outputs of the voltage controlled oscillator 205 and pulling the frequency of its output.

Figure 4 shows circuit diagrams of a constant pulse width generator suitable for use as the generator 31 of Figure 1, a low pass filter suitable for use as the low pass filter 41 of Figure 1, and a video amplifier suitable for use as the video amplifier 51 of Figure 1.

The constant pulse width generator 31 has an input 401 for receiving trigger input pulses and an output 414 at which output pulses of a predetermined pulse width are produced in response to the trigger pulses. The generator 31 comprises a ring oscillator which consists of three inverter stages 407, 408 and 409 which are connected in cascade with the output of the final inverter 409 being connected to the input of the first inverter 407 and a counter which consists of two D-type clocked bistable circuits 405 and 406. In the example shown the inverters 407, 408 and 409 comprise Signetics Corporation type 10115 differential line receivers and the bistable circuits Signetics Corporation type 10231 D-type master-slave flip-flops. A resistor 410 is connected between the Q output of bistable 406 and -5V to provide a collector load. The non-inverting inputs of the differential line receivers 407, 408 and 409 are connected to a constant voltage $V_{BB}$ which is obtainable from pin 9 of the integrated circuit. A further differential line receiver 402, which is conveniently the fourth unit in the type 10115 integrated circuit, is connected between the input 401 and the set inputs of the bistable circuits 405 and 406. In this case the input 401 is connected to the non inverting input of the line receive 402 via a differentiating circuit comprising a capacitor 403 and a resistor 404 while the inverting input is connected to the

constant voltage $V_{BB}$. With the inputs to the line receiver 402 connected as shown a positive trigger pulse at input 1 will set the bistable circuits 405 and 406. If the inputs to the line receiver 402 were reversed a negative trigger pulse would set the bistable circuits 405 and 406.

The $\overline{Q}$ output of bistable 405 is connected to its D input while the Q output is connected to the clock input of bistable 406. The $\overline{Q}$ output of bistable 406 is connected to the clock input of bistable 405 and to the output of inverter 409 while the Q output of bistable 406 is connected to the output 414 of the circuit arrangement. When the $\overline{Q}$ output of bistable 406 is HIGH (logic '1') the oscillator is clamped and no clock pulses are applied to the clock input of bistable 405.

The hard limited frequency modulated signal as shown in Figure 5a is applied to input 401 of the constant pulse width generator 31 and a differentiated signal (Figure 5c) applied to the input 402 of the line receiver 402. Figure 5b shows the resulting output at terminal 414 of the pulse generator 31 which comprises a train of pulses of constant pulse width having pulse separations corresponding to the intervals between positive transitions of the frequency modulated input signal 5a. Waveform 6a) represents the positive trigger pulses produced by the differentiating circuit and applied to the input of the line receiver 402 and waveform 6b) the trigger pulses at the output of the differential line receiver 402. The transitions in waveform 6b) correspond to the instants waveform 6a) passes through a given amplitude range but are delayed by the time $t_1$ which is equal to the propogation delay of the receiver 402. Positive trigger pulses at the input to the line receiver 402 will set the bistables 405 and 406 and waveform 6c) represents the signal at the $\overline{Q}$ output of bistable 406 the negative going transition being delayed by a period $t_2$ with respect to the instant of the positive going transition of the waveform 6b), the period $t_2$ being the propagation delay from the set input to the Q output of bistable 406. When the Q output of bistable 406 goes low the oscillator is released and clock pulses (waveform 6d) are fed to the clock input of bistable 405. At the first positive going transition of the waveform 6d the bistable 405 changes
state and the Q output (waveform 6g) goes low after a further delay $t_3$
which is the propagation delay from the clock input to the Q output of
bistable 405. At the next positive transition of the waveform 6d
the bistable 405 again changes state and the Q output goes high after
a delay $t_3$. The Q output of bistable 405 is fed to the clock input
of bistable 406 and the positive transition of waveform 6g causes the
bistable 406 to change state and the Q output of the bistable 406 to go
low at a time $t_4$ after the positive transition of waveform 6g, the
time $t_4$ being the propagation delay from the clock input to the Q output
of bistable 406. The Q output of bistable 406 which is the output of
the circuit arrangement is shown as waveform 6h. When the Q output of
bistable 406 goes low the $\bar{Q}$ output goes high to hold the output of
inverter 409 high. Waveforms 6e and 6f represent the outputs of
inverters 408 and 407 respectively and it can be seen that when the
output of inverter 409 is held high by bistable 406 the output of
inverter 407 is low and that of inverter 408 high thus trying to drive
the output of inverter 409 low. Consequently as soon as bistable 406
changes state the oscillator will start consistently with the output
of inverter 409 going low. That is the output of oscillator will always
start at the negative transition. The pulse width of the pulse produced
by the circuit arrangement is $1\frac{1}{2}$ periods of the ring oscillator
period $+t_3$, $+t_4$. Since the propagation delays of the receivers and
bistables is temperature dependent the output pulse width will vary
with temperature and ageing of the components. However, in pulse
counting frequency modulation detectors such long term fluctuations
are unimportant so long as they do not cause the pulse width to be
greater than the period of one cycle of the highest frequency of the
frequency modulated signal.

The pulse generator 31 produces a substantially constant pulse width
without requiring a large count since the oscillator is enabled as a
result of the trigger pulse and always starts from the same initial
condition.

The pulse width of the trigger signal should be chosen so that it is
long enough to cause reliable setting of bistables 405 and 406 but not
so long that it is still present when the first positive transition of

0058446
PHB 32759

the output of inverter 409 reaches the clock input of bistable 405, that is half the oscillator cycle period. For the circuit components specified a trigger pulse width in the range 3 to 7 nanoseconds has been found to be satisfactory. Trigger pulses having pulse width greater than the period of half the oscillator cycle period will delay the start of the counter 7 and cause the output pulse width to be increased in incremental steps of one period of the oscillator frequency.

The pulse generator shown had advantages over monostable multivibrator in that the output can be loaded without affecting the timing within the oscillator and counting circuits.

The pulse generator 31 as shown in Figure 4 is capable of high duty factor operation which is limited only by the rise and fall times of the Q output of bistable 406. With the embodiment shown duty cycles of up to 90% are possible with a 25 nanosecond pulse width.

It also has the property that when the interval between trigger pulses becomes nearly equal to or less than the normal output pulse duration the output pulses coalesce to give a constant high output level. This property is particularly desirable when the pulse generator is used as part of a pulse counting F.M. detector since if, due to overload or drift, the interval between transitions of the F.M. signal becomes less than the normal pulse width of the pulse produced by the pulse generator the effect is merely to restrict the response of the detector to the high frequency components of the F.M. signal rather than to produce a spurious output. The pulse generator shown in Figure 4 possesses this property as a result of ensuring that the output of inverter 409 is HIGH when the $\overline{Q}$ output of bistable 406 goes HIGH. That is the oscillator is held in the state it has already reached and is not forced into a different state. Other configurations of the counter or disabling the oscillator by connecting the output of the bistable 406 to the input of the inverter 409 which is shown connected to $V_{BB}$ in Figure 4 may cause the arrangement to produce spurious pulses when the input pulse separation approaches or becomes smaller than the duration of the output pulses.

The pulse width of the output produced by this circuit depends on the propagation delays of the inverters of the oscillator and bistables of the counter. These are temperature dependent but in many applications, long term stability is not important. Thus in pulse counting FM detectors the requirement is only that the pulse width remains constant over a time interval which is long compared with the period of the signals being detected.

Variation of the pulse width may be obtained in a number of ways. If the number of inverters in the ring is altered the frequency of oscillation will be altered. It is, of course, essential to have an odd number of inverters to form a ring oscillator. If the number of stages in the counter is increased the pulse width will be increased. The counter may be arranged to count any number, the pulse width increasing as the count increases. A capacitor may be connected to load the output of one or more of the inverters to produce an increase in the propagation delay of the inverter thus reducing the frequency of the ring oscillator. Alternatively faster or slower logic families may be used i.e. logic families in which the propagation delays of the inverters and flip flops are smaller or greater.

The output 414 of the constant pulse width generator 31 is connected via the series arrangement of a capacitor 411 and a resistor 412 to the input 415 of the low pass filter 41. The filter 41 is a seven element Chebyshev filter comprising inductors L1 to L3 and capacitors C1 to C4 and is designed to have a pass band of 6.5 MHz, a passband ripple of 0.05 dB, an attenuation of 55dB at 16 MHz, and a characteristic impedance of 75Ω.

The output 416 of the filter 41 is connected to the input 417 of the video amplifier 51. The input 417 of the amplifier 51 is connected to the junction of a resistor 418, whose other end is connected to a point of constant potential, and the non inverting input of an amplifier 419 which comprises a type NE 5539 integrated operational amplifier. The output of amplifier 419 is connected to the junction of a variable resistor 420 and two fixed resistors 421 and 422. The other end of resistor 421 is connected to a point of constant potential while the other end of resistor 422 is connected to the output 423 of the video amplifier 51. The other end of the variable resistor 420 is connected to the junction of the inverting input of amplifier 419 and a resistor 424 whose other end is connected to a point of constant potential. The gain of the amplifier 51 is set by means of variable resistor to give
a IV peak to peak output.

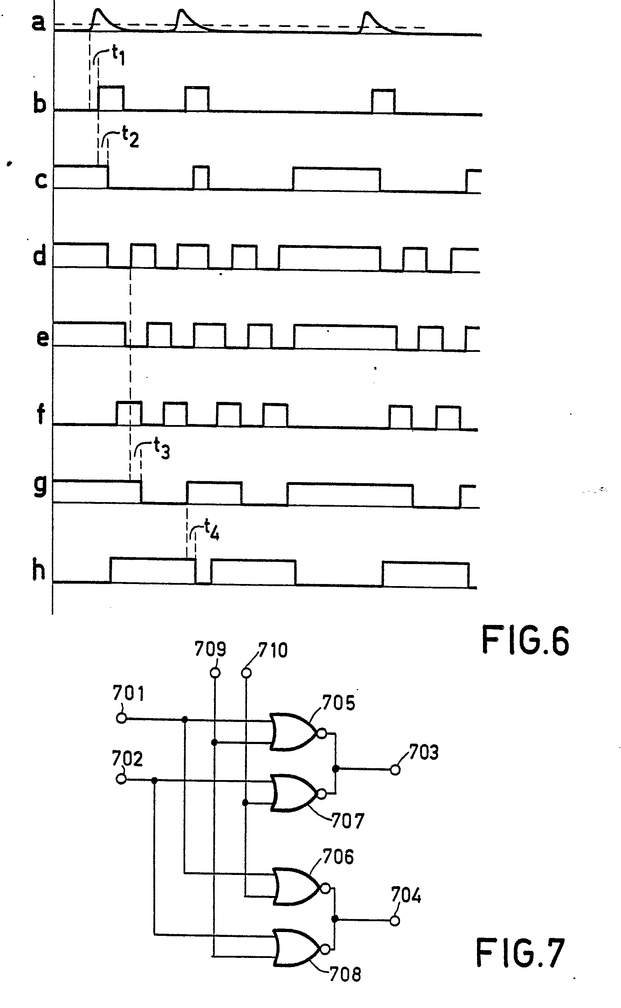

The number of inputs and outputs of the switching matrix may be
chosen to suit a particular application.  Figure 7 shows a switching
matrix having two inputs 701 and 702 and two outputs 703 and 704.
The input 701 is connected to a first input of two NOR gates 705 and
706 while the input 702 is connected to a first input of two NOR gates
707 and 708.  A first control input 709 is connected to a second
input of NOR gates 705 and 708 while a second control input 710 is
connected to a second input of NOR gates 706 and 707.  The outputs of
NOR gates 705 and 707 are commoned and fed to the output 703 of the
switching matrix while the outputs of NOR gates 706 and 708 are
commoned and fed to the output 704 of the switching matrix.  If the
NOR gates 705 to 708 are Signetics Corporation type 1662 then a HIGH
logic level on control input 709 and a LOW logic level on control
input 710 will cause an inverted version of the signal presented at
input 701 to be produced at output 704 and an inverted version of the
signal presented at input 702 to be produced at output 703.  When
control input 709 is fed with a LOW logic level and control input 710
is fed with a HIGH logic level then an inverted version of a signal
present at input 701 will be produced at output 703 and an inverted
version of a signal present at input 702 will be produced at output
704.  It should be noted that with the arrangement shown in Figure 7
it is not possible to connect one input to both outputs.

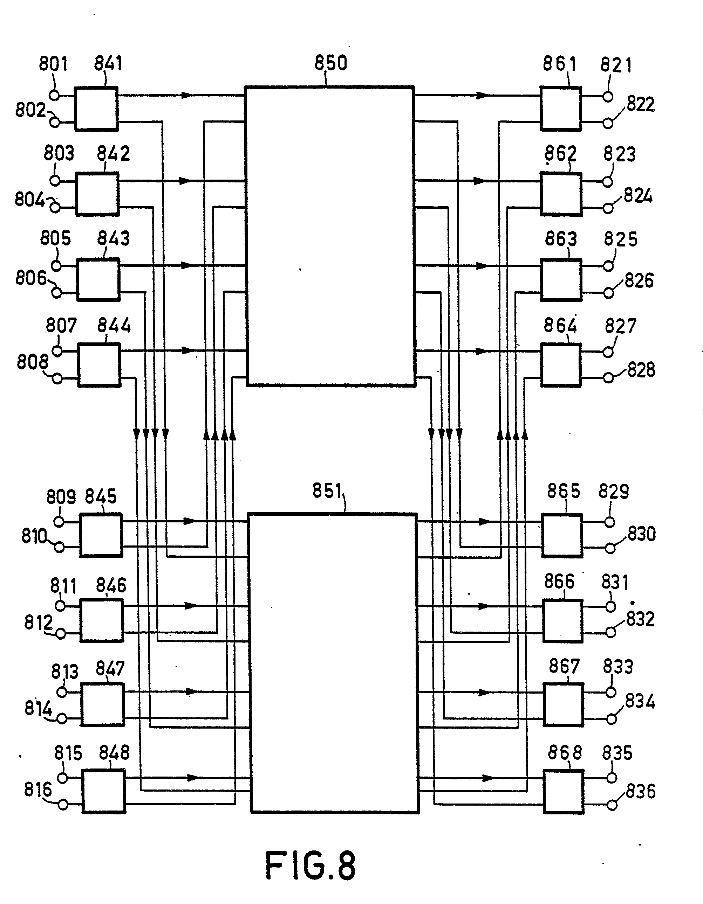

Figure 8 shows a switching matrix having sixteen inputs 801 to 816
and sixteen outputs 821 to 836 which is constructed from the switching
matrices shown in Figures 3 and 7.  Eight blocks 841 to 848, which are
constructed as shown in Figure 7 are connected between the inputs 801-
816 and the inputs of two blocks 850 and 851 which are constructed as
shown in Figure 3.  The outputs of the blocks 850 and 851 are connected
to the outputs 821 to 836 via eight further blocks 861 to 868 which
are constructed as shown in Figure 8.  For the sake of clarity the
control inputs of each of the blocks 841 to 848, 850, 851 and 861 to
868 have been omitted.

As can be seen from Figure 8 one output of each of the blocks 841 to 848 is connected to a respective input of block 850 while the other output of each of the blocks 841 to 846 is connected to a respective input of block 851. Similarly one input of each of the blocks 861 to 868 is connected to a respective output of block 850 while the other input of each of the blocks 861 to 868 is connected to a respective output of block 851. In this way, by applying appropriate control signals to the blocks 841 to 848, 850, 851 and 861 to 868, a signal may be routed from any input 801 to 816 to any output 821 to 836.

The control circuit 20 could comprise simple manual switches or could be part of a larger control system particularly if several switch matrices are interconnected to produce a larger array. The number of inputs and outputs, either of the or each matrix or of the circuit arrangement, could be different from each other. The interconnection patterns can be arranged to take account of traffic considerations as is well known in telephone switching thus allowing an economy of switching units.

The invention is not limited to the use of a voltage controlled oscillator as the frequency modulator and any convenient frequency modulator could be substituted for the one shown in Figure 2. Further the demodulation of the signal emerging from the switching matrix may be achieved by means other than that described with reference to Figure 4. The particular method shown is convenient when transmitting the frequency modulated signals via optical cables since it enables the use of light emitting diodes as the transmitting device and the use of comparatively low bandwidth cable since only the baseband component is required at the receiving end.

Claims:

1.　　　A circuit arrangement for distributing one or more wideband signals to one or more selected outputs comprising a switching matrix having a plurality of inputs and a plurality of outputs, control means for causing selected inputs of the switching matrix to be coupled to selected outputs of the switching matrix, means for coupling inputs of the circuit arrangement to corresponding inputs of the switching matrix, and means for coupling outputs of the switching matrix to corresponding outputs of the circuit arrangement, characterized in that the means for coupling each input of the circuit arrangement to the correponding input of the switching matrix comprises frequency modulation means arranged to produce a signal which is frequency modulated by the wideband signal applied to the respective input of the circuit arrangement said frequency modulated signal being amplitude limited such that the information content of the signal is contained solely in the transition times of the signal, that the switches within the shwitching matrix are effective to maintain the relative transition times of the frequency modulated signal, and the means for coupling outputs of the switching matrix to outputs of the circuit arrangement comprises means for demodulating the frequency modulated signal.

2.　　　A circuit arrangement as claimed in Claim 1 in which the frequency modulation means comprises a voltage controlled oscillator, the wideband signal being fed to the control input thereof.

3.　　　A circuit arrangement as claimed in Claim 2 comprising/buffer amplifier connected between the output of the voltage controlled oscillator and the input of the switching matrix.

4.　　　A circuit arrangement as claimed in any of Claims 1 to 3 in which the switch matrix comprises m, one out of n line data selectors where m and n are integers greater than one.

5.　　　A circuit arrangement as claimed in any of Claim 1 to 4 in which the switch matrix comprises a plurality of interconnected switch matrices.

6.　　　A circuit arrangement as claimed in any of Claims 1 to 5 in which the means for demodulating the frequency modulated signal comprises a pulse generator arranged to produce a pulse of predetermined pulse width in response to transitions of the signal at the output of the switching matrix, the predetermined pulse width being shorter than the period of one cycle of the highest frequency of the frequency modulated signal, and means for filtering the pulse train produced by the pulse generator to recover the input wideband signal.

7.      A circuit arrangement as claimed in Claim 6, in which the pulse generator comprises a further oscillator, a counter, means for presetting the counter in response to a transition of the frequency modulated signal, means for feeding the output of the oscillator to a clock input of the counter; means for feeding an output of the counter to the output of the pulse generator and means for causing the oscillator to start from a predetermined point of its cycle in response to a transition of the frequency modulated signal, in which the further oscillator comprises 2n+1 inverter stages, where n is a positive integer, connected in cascade with the output of the final inverter connected to the input of the first inverter and that a further output of the counter is connected to the output of one of the inverters to enable the further oscillator on presetting the counter and disable the further oscillator after a predetermined number of oscillations have been counted by the counter.

8.      A circuit arrangement as claimed in Claim 7 in which a trigger pulse is derived from a transition of the frequency modulated signal, the trigger pulse width being less than the period of one half cycle of the further oscillator frequency.

9.      A circuit arrangement as claimed in Claim 8 or 9 in which the means for filtering the pulse train comprises a low pass filter, having a passband of the filter of approximately 6.5 MHz.

10.     A circuit arrangement as claimed in any of Claims 6 to 9 including an optical fiber transmission line between the constant pulse width generator and the filtering means.

FIG.1

FIG.2

0058446

FIG.3

FIG.4

FIG.5

FIG.6

FIG.7

0058446

FIG.8

0058446

**European Patent Office**

**EUROPEAN SEARCH REPORT**

Application number

EP 82 20 0105

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | DE - B - 2 828 662 (SIEMENS) <br> * Column 2, line 22 - column 3, line 7; column 4, lines 6-17 * | 1 | H 04 N 5/22 <br> 7/00 <br> H 04 Q 3/52 |
| Y | | 2,4-6 | |
| A | | 3,10 | |
| | -- | | |
| | DE - A - 2 629 604 (BOSCH) | | |
| Y | * Page 3, last paragraph - page 4, last line * | 2,6 | TECHNICAL FIELDS SEARCHED (Int.Cl. 3) |
| A | | 9,10 | |
| | -- | | H 04 H 1/00 <br> 1/02 <br> 7/00 |
| Y | DE - A - 2 500 939 (LICENTIA) | | H 04 N 5/22 <br> 7/00 |
| | * Page 2, lines 1-12; page 5, lines 12-18 * | 4,5 | H 04 J 3/04 <br> H 04 Q 3/52 |
| | -- | | H 04 Q 11/00 <br> H 03 C 3/00 |
| A | US - A - 3 958 183 (SCHAEFER) | | H 03 D 3/04 |
| | * Figure 1 * | 7,8 | |
| | ----- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search | Date of completion of the search | Examiner | |
| The Hague | 08-04-1982 | MIKKELSEN | |

EPO Form 1503.1 06.78